# EUROPÄISCHE PATENTSCHRIFT

(11) **EP 1 663 636 B1**
(45) Veröffentlichungstag und Bekanntmachung des Hinweises auf die Patenterteilung: **30.09.2009**
(21) Anmeldenummer: 04763701.2
(22) Anmeldetag: 02.08.2004
(51) Int. Cl.: B32B 1/08, B32B 27/12, B32B 27/34, A22C 13/00

(54) **MEHRSCHICHTIG COEXTRUDIERTE BIAXIAL GERECKTE FASERVEREDELTE NAHTLOSE SCHLAUCHHÜLLE SOWIE DEREN VERWENDUNG ALS NAHRUNGSMITTELHÜLLE**
MULTI-LAYERED, COEXTRUDED, BIAXIALLY STRETCHED FIBRE-IMPROVED SEAMLESS TUBE COVERING AND USE THEREOF AS A FOOD COVERING
ENVELOPPE TUBULAIRE CONTINUE APPRETEE PAR FIBRES, ETIREE BIAXIALEMENT, COEXTRUDEE, MULTICOUCHE, ET UTILISATION EN TANT QU'ENVELOPPE ALIMENTAIRE

(30) Priorität: 12.08.2003 DE 10337009
(43) Veröffentlichungstag der Anmeldung: 07.06.2006
(73) Patentinhaber: CaseTech GmbH & Co. KG, 29656 Walsrode (DE)
(72) Erfinder: TÖBBEN, Wilhelm, 34121 Kassel (DE); HENZE-WETHKAMP, Heinrich, 29664 Walsrode (DE)
(74) Vertreter: Polypatent
(86) Internationale Anmeldenummer: PCT/EP2004/008631
(87) Internationale Veröffentlichungsnummer: WO 2005/014272

(56) Entgegenhaltungen:
- EP-A- 0 879 560
- DE-A- 4 001 612
- DE-A- 4 339 337
- DATABASE WPI Section Ch, Week 197850 Derwent Publications Ltd., London, GB; Class A97, AN 1978-90410A XP002306689 & JP 53 127845 A (KUREHA CHEM IND CO LTD) 8. November 1978 (1978-11-08)

## Beschreibung

Die vorliegende Erfindung betrifft eine schlauchförmige, nahtlose, mindestens 3-schichtige, biaxial gereckte, schrumpffähige naturidentische Schlauchhülle für die dauerhafte und faltenfreie Umhüllung von pastösen oder flüssigen Gütern, insbesondere Nahrungsmitteln, die durch eine hohe Wasserdampf- und Sauerstoffbarriere gekennzeichnet ist und sehr gute anwendungstechnische Eigenschaften liefert.

Nahtlose Kunststoffhüllen werden häufig zur Umhüllung von pastösen oder flüssigen Gutern zu Herstellungs- und/oder Verpackungszwecken eingesetzt. Typische Anwendung sind die Verwendung solcher Hüllen zur Herstellung und/oder Verpackung von Brüh- und Kochwürsten, Schmelzkäse, Suppen oder stark fetthaltigen Pasten. Je nach herzustellendem bzw. zu verpackendem Gut müssen allerdings umfangreiche spezifische Anforderungen erfüllt werden, um den Anwendungen in der Praxis gerecht zu werden.

Zu diesen anwendungstechnischen Eigenschaftsanforderungen können beispielsweise bei der Wurstherstellung zählen:
- gute Barriereeigenschaften
- Temperaturbeständigkeit bis Sterilisationstemperatur
- gute Haftung zum Füllgut
- gute Weiterreißfestigkeit bei Warmlagerung
- ausreichender Schrumpf
- hohe Festigkeit, Formstabilität, Prallheit
- gutes Schälverhalten, leichte Schälbarkeit
- gutes Heiß und Kaltanschnittverhalten
- gute Stippbarkeit insbesondere Kalt- und Heißstippbarkeit
- leichte Konfektionierbarkeit, insbesondere Raffbarkeit
- gute Einfärbbarkeit und Farbdeckung
- gute Bedruckbarkeit und sichere Druckfarbenhaftung
- Unbedenklichkeit laut Lebensmittelrecht (Richtlinien EG, Bundesamt für gesundheitlichen Verbraucherschutz und Veterinärmedizin BGVV, Food and Drug Administration FDA)
- Ökologische Unbedenklichkeit der verwendeten Materialien

Zusätzlich wird immer häufiger eine naturidentische Haptik und ein optisch ansprechendes Aussehen wie dies bei Collagen- und Cellulosefaserdärmen mit oder ohne Barriereschicht bereits bekannt ist, verlangt.

Die bisher im Markt bekannten mehrschichtigen, biaxial gereckten, nahtlosen Hüllen sind speziell für die Herstellung und/oder Verpackung von Fleischprodukten, insbesondere Wurst, maßgeschneidert und genügen mehr oder weniger stark ausgeprägt den oben genannten anwendungstechnischen Anforderungen.

Von Kunden wird aber besonders ein optisch ansprechendes Produkt verlangt. Eine für die genannten Anwendungen geeignete Hülle ist demnach ergänzend bzw. abweichend zu dem oben beschriebenen Anforderungsprofil für Wursthüllen durch folgende Kerneigenschaften gekennzeichnet:
- naturidentische Optik und Haptik um den Eindruck eines besonders edlen Produktes zu erwecken.
- außerordentlich gute anwendungstechnische und insbesondere mechanische Eigenschaften wie beispielsweise Heißanschnitt, Kaltstippung, Weiterreißfestigkeit bei Warmlagerung und Kaliberkonstantz und Zylindrizität.

Aus Savic, Z.: Sausage Casings, VICTUS Lebensmittelindustriebedarf, Wien, Österreich, p. 245-300 ist bekannt, dass viele Schlauchhüllen vielen der oben genannten Anforderungen erfüllen, jedoch keine Hülle bekannt ist, die neben excellenten anwendungstechnischen Eigenschaften zudem ein naturidentisches edles Erscheinungsbild aufweist.

Die europäische Anmeldung EP-A-0 107 854 (*Kureha, III.4, 01.10.82*) beschreibt ein schlauchförmiges, 5-schichtiges Laminat bestehend aus einer inneren Schicht aus thermoplastischem Harz, einer Mittelschicht aus Vinylidenchlorid-Copolymerisat (PVDC), einer äußeren Schicht aus Olefinharz und zwei Klebeschichten zwischen den Hauptschichten. Die Hülle enthält als Komponente halogenhaltiges PVDC, dessen Verwendung ökologisch bedenklich ist und daher heute immer weniger akzeptiert wird. Weiter ist dieser Hülle der typische Glanz und die typische glatte Oberfläche einer Kunststoffschlauchhülle gemeint, die beim Verbraucher ein unangenehm künstlichen Eindruck hinterlässt.

Die DE-A-40 01 612 *(Kalle, XI.20, 20.01.90)* gibt eine schlauchförmige, 3-schichtig coextrudierte, biaxial gereckte Hülle mit einer inneren und äußeren Schicht aus Polyamid oder einem Polyamid enthaltenden Polymerblend und einer sauerstoffsperrenden mittleren Schicht aus aromatischem Polyamid oder Copolyamid bekannt. Dieser Hülle ist der typische Glanz und die typische glatte Oberfläche einer Kunststoffschlauchhülle gemein, die beim Verbraucher ein unangenehm künstlichen Eindruck hinterlässt.

In der DE-A-43 39 337 *(Naturin, 11.14, 19.11.93)* wird eine 5-schichtige Schlauchhülle zur Verpackung und Umhüllung von pastösen Lebensmitteln beschrieben. Diese Schlauchhülle, insbesondere Wursthülle, auf Basis Polyamid ist dadurch gekennzeichnet, dass sie aus einer inneren und einer äußeren Schicht aus dem gleichen Polyamidmaterial, bestehend aus wenigstens einem aliphatischem Polyamid und/oder wenigstens einem aliphatischem Copolyamid und/oder wenigstens einem teilaromatischen Polyamid und/oder wenigstens aus einem teilaromatischen Copolyamid, einer mittleren Polyolefinschicht sowie aus zwei aus dem gleichen Material bestehenden Haftvermittlerschichten aufgebaut ist. Der Anteil des teilaromatischen Polyamids und/oder Copolyamids beträgt 5 bis 60 %, insbesondere 10 bis 50 %, bezogen auf das Gesamtgewicht der Polymermischung aus teilaromatischen und aliphatischen Polyamiden und Copolyamiden. Der Nachteil dieser Hülle ist der typische Glanz und die typische glatte Oberfläche einer Kunststoffschlauchhülle, die beim Verbraucher ein unangenehm künstlichen Eindruck hinterläßt.

Aus der EP-A-0 879 560 *(Kalle, XI.35, 21.05.97)* ist eine mindestens 4-schichtige, biaxial gereckt Nahrungs-mittelhülle mit zwei Sauerstoff Barriereschichten bekannt. Die Sauerstoffsperr-wirkung wird hier im wesentlichen durch eine nicht außen liegende, EVOH enthaltende Schicht und eine außen liegende, Polyamid mit aromatischen Anteilen enthaltende Schicht bewirkt. Dieser Hülle ist der typische Glanz und die typische glatte Oberfläche einer Kunststoffschlauchhülle gemein, die beim Verbraucher ein unangenehm künstlichen Eindruck hinterlässt.

Bekannterweise kann durch den Einsatz von anorganischen Zusätzen in der Aussenschicht oder durch einen zusätzlichen Bedruckvorgang eine gewisse Änderung des Oberflächenglanzes erzielt werden, die jedoch zumeist den Nachteil hat durch eine regelmäßige Struktur künstlich zu wirken. Hinzu kommt ein zusätzlicher zeitlicher und finanzieller Aufwand des Bedruckens der Hülle.

Die hier zum Stand der Technik beschriebenen Schlauchhüllen weisen bezogen auf das oben beschriebene Anforderungsprofil in einzelnen Punkten Defizite auf. Insbesondere zeigen die im Markt bekannten Hüllen Defizite hinsichtlich der Merkmale gute Barriereeigenschaften, gute anwendungstechnische Eigenschaften insbesondere mechanische Eigenschaften, ansprechendes Aussehen durch naturidentische Optik und Haptik auf. Eine Hülle die dieser Eigenschaften erfüllt, ist bislang nicht bekannt.

Es stellte sich daher die Aufgabe, eine nahtlose Schlauchhülle zu entwickeln, die das genannte Anforderungsprofil insbesondere hinsichtlich einem entsprechenden Aussehen durch eine naturidentsche Optik und Haptik erfüllt und die excellente anwendungstechnische Eigenschaften insbesondere sehr gute mechanische Festigkeit und gute Barriereeigenschaften aufweist.

Die vorliegende Erfindung löst diese Aufgabe durch Bereitstellung einer mindestens dreischichtigen vorzugsweise fünfschichtigen, coextrudierten, schlauchförmigen, biaxial gereckten, faserveredelten nahtlose Schlauchhüllen, mit den Merkmalen gemäß Anspruch 1.

Die Herstellung der erfindungsgemäßen Schlauchhülle geschieht zweckmäßig über ein Extrusionsverfahren. Der in Faser-, Granulat- oder Pulverform vorliegende Rohstoff wird in einem Extruder komprimiert, aufgeschmolzen, homogenisiert und über eine Düse ausgetragen und zu einem nahtlosen Schlauch geformt. Der austretende Primärschlauch wird mittels Luft- oder Wasserkühlung abgekühlt und anschließend simultan biaxial verstreckt. Ein besonders geeignetes Verfahren ist dabei das simultane biaxiale Recken mittels Double-Bubble-Technologie, bei der die Verstreckung der Primärblase über einen anliegenden Innendruck erfolgt. Zur gezielten Einstellung der Schrumpfeigenschaften kann die Hülle anschließend einer Wärmebehandlung unterzogen werden.

Es ist bekannt, dass es bei der Verarbeitung von Naturfasern zu einer thermischen und mechanischen Schädigung kommen kann. Eine thermische Schädigung macht sich durch Inhomogenitäten wie z.B. in Form von Stippen und/oder Verbrennern bemerkbar. Eine mechanische Schädigung ist durch eine unerwünschte Reduzierung der Faserlänge und Faseidurchmesser sowie deren Verteilung erkennbar. Überraschenderweise konnte die Naturfaser ohne signifikante thermische Schädigung in die Polyamid-Matrix eingemischt werden. Durch eine geeignete Prozessführung konnte hierbei gleichzeitig die mechanische Schädigung der Fasern nach Bedarf eingestellt werden. Es war weiter überraschend, dass die haptischen und optischen Eigenschaften der erzeugten Hülle denen eines Collagen-, Cellulosefaserdarm mit, und ohne Barriereschicht bei wirtschaftlicherer Herstellung ähnelten. Erstaunlicherweise war das mechanische Verhalten der Hülle sehr gut. So konnte der Schlauch gestippt und gerafft werden, ohne beim anschließenden Brühen aufzuplatzen oder weiterzureißen. Die Barriereeigenschaften wie beispielsweise Wasserdampf- und Sauerstoffdurchlässigkeit können über den Faseranteil angepasst werden, so dass auch der Einsatz in Schlauchhüllen mit reduzierter Barrierewirkung und natürlichem Erscheinungsbild denkbar ist. Eine Sauerstoffbarriere verhindert bei Lagerung bekanntermaßen eine frühzeitige Vergrauung des der Hülleninnenseite zugekehrten Brätes. Die Wasserdampfbarriere behinder bei Lagerung bekanntermaßen den durch Verdunsten von Wasser aus dem Füllgut induzierten Gewichtsverlust der Verkaufsware, der einerseits den Erlös des Produktes reduziert und anderseits infolge von Volumenschwindung zu faltigen unansehnlichen Produkten führen kann.

Der Aufbau der Schlauchhülle weist vorzugsweise eine Gesamtdicke von 5-150 µm bei Durchmessern von 5-500mm und ist wie folge zusammengesetzt:
Schicht A: Aussenschicht mit der Möglichkeit zum Bedrucken
Schicht B: Zweitäussere Schicht (zwischen Aussenschicht und Mittelschicht)
Schicht C: Mittelschicht
Schicht D: Zweitinnere Schicht zwischen Innenschicht und Mittelschicht
Schicht E: Innenschicht mit Kontakt zum Füllgut

Die Naturfasern werden in mindestens einer der Schichten eingemischt vorzugsweise in den Schicht A und/oder B und/oder C und/oder D und/oder E und gegebenenfalls könne-n ein oder mehrere Schichten weggelassen oder hinzugefügt werden.

Die äußere, ohne Vorbehandlung bedrückbare Schicht A besteht als Hauptkomponente entweder aus einem aliphatischen Homopolyamid oder einem aliphatischen Copolyamid oder einem Blend aus aliphatischem Homo- und Copolyamid oder einem Blend aus aliphatischem Homo- oder Copolyamid und einem teilaromatischen Polyamid. Als aliphatische Homo- und Copolyamide eigenen sich solche Polyamide, wie sie in allgemeiner Weise im Kunststoffhandbuch Teil 3/4 "Polyamide" Seite 22 ff, Carl Hanser Verlag München Wien 1998 beschrieben sind. Das aliphatische Polyamid ist ein Homopolyamid aus aliphatischen primären Diaminen und aliphatischen Dicarbonsäuren oder ein Homopolymerisat von ω-Amino-carbonsäuren oder deren Lactamen. Das aliphatische Copolyamid enthält die gleichen Einheiten und ist z. B. ein Polymer auf Basis eines oder mehrerer aliphatischer Diamine und einer oder mehrerer Dicarbonsäuren und/oder einer oder verschiedener ω-Aminocarbonsäuren oder deren Lactamen. Die aliphatischen primären Diamine enthalten insbesondere 4 bis 8 C-Atome. Geeignete Diamine sind Tetra-, Penta-, Hexa- und Octamethylendiamin, besonders bevorzugt ist Hexamethylendiamin. Die aliphatischen Dicarbonsäuren enthalten insbesondere 4 bis 12 C-Atome. Beispiele für geeignete Dicarbonsäuren sind Adipinsäure, Azelainsäure, Sebazinsäure und Dodecandicaibonsäure. Die ω-Aminocarbonsaure bzw. deren Lactame enthalten 6 bis 12 C-Atome. Ein Beispiel für ω-Aminocarbonsäuren ist die 11-Aminoundecansäure. Beispiele für Lactame sind ε-Caprolactam und ω-Laurinlactam. Besonders bevorzugte aliphatische Polyamide sind Polycaprolactam (PA 6) und Polyhexamethylenadipinamid (PA66). Ein besonders bevorzugtes aliphatisches Copolyamid ist PA 6/66, das aus Caprolactam-, Hexa-methylendiamin- und Adipinsänreeinheiten besteht. Teilaromatische Polyamide werden im Kunststoffhandbuch Teil 3/4 "Polyamide" Seite 803 ff Carl Hanser Verlag München Wien 1998 beschrieben.

Bei den teilaromatischen Polyamiden und Copolyamiden können entweder die Diamineinheiten überwiegend oder ausschließlich die aromatischen Einheiten bilden, während die Dicarbonsäureeinheiten überwiegend oder ausschließlich aliphatischer Natur sind, oder die Diamineinheiten sind überwiegend oder ausschließlich aliphatischer Natur, während die Dicarbonsäureienheiten überwiegend oder ausschließlich die aromatischen Einheiten bilden. Beispiele für die erste Ausführungsform sind teilaromatische Polyamide oder Copolyamide, bei denen die aromatischen Diamin-einheiten aus m-Xylylendiamin und Phenylendiamin bestehen. Die aliphatischen Dicarbonsäureeinheiten dieser Ausführungsform enthalten gewöhnlich 4 bis 10 C-Atome, wie z.B. Adipinsäure, Sebazinsäure und Azelainsäure.

Neben den aromatischen Diamineinheiten und den aliphatischen Dicarbonsäureeinheiten können auch noch aliphatische Diamineinheiten und aromatische Dicarbonsäureeinheiten in Mengen von jeweils bis zu 5 Mol-% enthalten sein. Eine besonders bevorzugte Ausführungsform besteht aus m-Xylylendiamin- und Adipinsäure-Einheiten. Dieses Polyamid (PA-MXD6) wird z.B. von der Firma Mitsubishi Gas Chemical Company Inc. unter dem Namen MX-Nylon vertrieben. Beispiele für diese zweite Ausführungsform sind teilaromatische Polyamide und Copolyamide, bei denen die aliphatischen Diamine gewöhnlich 4 bis 8 C-Atome enthalten. Unter den aromatischen Dicarbonsäuren sind insbesondere Isophthalsäure und Terephthalsäure hervorzuheben. Neben den aliphatischen Diamineinheiten und den aromatischen Dicarbonsäureeinheiten können auch noch aromatische Diamin-einheiten und aliphatische Dicarbonsäureeinheiten in Mengen von jeweils bis zu 5 Mol-% enthalten sein.

Eine besonders bevorzugte Ausführungsform besteht aus Einheiten von Hexa-methylendiamin, Isophthalsäure und Terephthalsäure. Dieses Polyamid (PA6I/6T) wird z. B. von der Fa. DuPont De Nemours unter dem Namen Selar PA vertrieben. Die Zugabe von teilaromatischem Polyamid PA6I/6T erfolgt in bevorzugter Weise in Mengen zwischen 2 und 40 Gew.-% pro Schicht, insbesondere zwischen 5 und 20 Gew.-%. Die Zugabe von teilaromatischem Polyamid PA-MXD6 erfolgt in bevorzugter Weise in Mengen zwischen 5 und 40 Gew.-% pro Schicht, insbesondere zwischen 10 und 30 Gew.-%. Zusätzlich kann Schicht A Additive wie Gleitmittel, Antiblockmittel, Nukleirungsmittel, Füllstoffe und Farbpigmente beinhalten oder ein Gemisch aus diesen.

Die zweitäußere Schicht B besteht aus einem annähernd vollständig hydrolysierten Ethylen-Vinylacetat-Copolymeren (EVOH) mit einem Ethylen-Anteil von 25 bis 53 Gewichts-%, bevorzugt von 29 bis 38 Gewichts-%. Die Schichtstärke liegt zwischen 2 und 30 µm, in einer bevorzugten Ausführungsform zwischen 2 und 8 µm, besonders bevorzugt zwischen 3 und 6 µm. Gegebenenfalls kann Schicht B aus den in der Beschreibung von Schicht A oder Schicht D erwähnten Polymeren und Zusatzstoffen bestehen, jedoch gegebenenfalls eine andere Zusammensetzung als Schicht A aufweisen oder gänzlich weggelassen werden.

Die mittlere Schicht C besteht aus den in der Beschreibung von Schicht A erwähnten Polymeren und. Zusatzstoffen, hat aber gegebenenfalls eine andere Zusammensetzung als Schicht A. Gegebenenfalls kann Schicht C auch gänzlich weggelassen werden.

Die zweitinnere, zwischen mittlerer Schicht C und innerer Schicht E ist die haftvermittelnde Schicht D. Diese besteht bevorzugt aus modifizierten Polyolefinen, Es handelt sich dabei um modifizierte Homo- und Copolymere des Ethylens oder Propylens und gegebenenfalls weiterer linearer α-Olefine mit 3 bis 8 C-Atomen, die Monomere aus der Gruppe der α,β-ungesättigten Dicarbonsäuren, wie z.B. Maleinsäure, Fumarsäure, Itaconsaure oder deren Säureanhydride, Säureester, Säureamide oder Säureimide aufgepropft enthalten. Weiterhin geeignet sind ionomere Copolymerisate von Ethylen und Propylen und gegebenenfalls von weiteren linearen, 3 bis 8 C-Atome enthaltenden α-Olefinen mit α,β-ungesättigten Carbonsäuren, wie Acrylsäure, Methacrylsäure und/oder deren Metallsalze und/oder deren Alkylester oder entsprechende Propfpolymere der genannten Monomere auf Polymere oder partiell verseifte Ethylen-Vinylester-Copolymerisate, die gegebenenfalls mit einem Monomer der genannten Säuren pfropfpolymerisiert sind. Die Schichtdicken der liegen zwischen 1 und 30 µm und in einer bevorzugten Ausführungsform zwischen 1 und 6 µm. Gegebenenfalls kann Schicht D aus den in der Beschreibung von Schicht A oder B erwähnten Polymeren und Zusatzstoffen bestehen, jedoch gegebenenfalls eine andere Zusammensetzung als Schicht A oder B aufweisen.

Die innere Schicht E besteht als Hauptkomponente aus den in der Beschreibung von Schicht A erwähnten Polymeren und Zusatzstoffen, hat aber gegebenenfalls eine andere Zusammensetzung als Schicht A. Darüberhinaus kann die Schicht auch andere Stoffe, bevorzugt Farbpigmente, enthalten. Die bevorzugte Schichtdicke der Schicht E beträgt weniger als 10 µm.

Zur Verbesserung des Verarbeitungsverhaltens und des Öffnungsverhaltens können der innen liegenden Schicht und/oder der außen liegenden Schicht Additive zugegeben werden. Hierbei haben sich vor allem Antiblock- und Gleitadditive als geeignet erwiesen. Diese Antiblockadditive basieren z.B. auf Siliciumoxidbasis.

Zur Reduzierung des Einflusses von Licht auf das Füllgut können einzelne Schichten mit UV-Licht-Absorbern additiviert werden. Hier haben sich anorganische Pigmente, insbesondere Zink-, Titan-, Eisen- und Siliciumoxide, bewährt. In einer bevorzugten Ausführungsform wird das anorganische Feinstpigment mittels Masterbatch, dessen Trägermaterial mit dem Grundmaterial der Schicht kompatibel ist, in den Verbund eingebracht. Die Menge des Pigments liegt bei 0,1 bis 5 Gew.-%, bevorzugt 0,5 bis 2,5 Gew.-% bezogen auf das Gesamtgewicht der Schlauchhülle.

Die eingemischten Naturfasern können Fasern auf Basis von Polysacchariden wie z.B. Cellulosefasern aus Pflanzen wie z.B. Hanf, Jute, Leinen, Bambus, Kokosnuss, Holz oder auch Cellulosefasern aus Regeneratcellulose nach dem Viskose- oder Lyocellverfahren oder natürlichen Mineralfasern wie Kohlenstofffasern sein. Bevorzugt wird eine Cellulosefaser eines Laubholzes, Weichholzes oder Nadelholzes mit einer Länge von 5-10000 µm, bevorzugt mit einem 95 % Anteil mit der Länge 5-35 µm und/oder 35-350 µm und/oder 350-10000 µm, besonders bevorzugt mit der Länge 5-35 µm und/oder 350-10000 µm bei einem Durchmesser von 2-30µm eingesetzt. Die Fasern können auch als Mischung daraus, besonders bevorzugt als bimodale Mischung daraus eingesetzt werden. Die Schüttdichte solcher Cellulosefasern schwankt je nach Faserlänge und Typ zwischen 20-600g/l. Die Fasern können thermisch und/oder physikalisch und/oder chemisch vorbehandelt sein.

Die eingemischte Menge der Fasern in der Schicht beträgt zwischen 0,1-70 % bevorzugt zwischen 0,1-10% und besonders bevorzugt zwischen 0,1-7% Gewichtsprozent. Die eingemischte Fasermenge kann aus verschiedenen Fasertypen und/oder Faserlängen bestehen, besonders bevorzugt ist ein Gemisch aus verschieden Fasertypen und/oder Faserlängen.

Die Naturfasern können mittels eines Compounds oder Masterbatches auf der Basis eines aliphatischem Polyamid wie PA6, Prall, PA12, PA66, PA6/66, PA6.8, PA6.9, PA6.10, PA6.11, PA6.12 und/oder anderen Thermoplasten oder durch direkte Einmischung verarbeitet werden. Bevorzugt wird ein Compound oder Masterbatch auf der Basis eines niedrigschmelzenden Polyamids wie PA6/66 und/oder PA12. Die Schichten der Hülle können Additive wie Gleitmittel, Antiblockmittel, Nukleirungsmittel, Füllstoffe und Farbpigmente beinhalten oder ein Gemisch aus diesen.

Das Masterbatch und/oder Compound kann als Granulat oder als Pulver hergestellt sein. Bevorzugt wird die Granulatform, die kugelförmig oder zylindrisch sein kann. Besonders bevorzugt wird ein zylindrisches Granulat zwischen 2-7 mm Länge und 1-4 mm Durchmesser mit porösem Charakter der durch eine spezielle Herstellung realisiert werden kann und zu einer reduzierten Scherkraft in der glatten und genuteten Feststoffzone des Extruders führt. Das Masterbatch und/oder Compound kann gegebenenfalls vorgetrocknet werden.

Die Herstellung der nahtlosen Schlauchhülle kann mit Hilfe des Blasfolien- oder Double-Bubble- X Verfahren hergestellt werden, wobei ein Doppel- oder Einschneckenextruder verwendet werden kann. Bevorzugt wird das Double-Boubble-Verfahren. Die nahtlose Schlauchhülle ist bevorzugt biaxial verstreckt mit einem Flächenreckgrad von 4-10 und besonders bevorzugt von 6-10, da in diesem Flachenreckgraden die Faserorientierungen ein eine besonders hohe Weiterreißfestigkeit bei sehr positiven Schälverhalten bewirken. Zusätzlich wird bei diesen Flächenreckgraden eine besonders gute Bedruckbarkeit ermöglicht sowie eine excellente Prallheit und Zylindrizität der fertigen Würst erzielt.

Die coextrudierte Schlauchhülle weist üblicherweise einen freien Schrumpf in mindestens einer Orientierungsrichtung gemessen im Wasserbad bei 100°C nach 15 min zwischen 1 und 35%, insbesondere zwischen 2 und 20% auf.

Ein weiterer Gegenstand der Erfindung ist die Verwendung der erfindungsgemäßen nahtlosen Schlauchhülle als Umhüllung für pastöse oder flüssige Füllgüter. Der besondere Vorteil einer nahtlosen Schlauchhülle besteht darin, dass ein kontinuierliches; spiralförmiges Schälen der Wurst möglich ist ohne durch Störstellen wie beispielsweise eine Verbindungsnaht eingeschränkt zu sein. Zusätzlich ist der optische und haptische Eindruck, die Barriereeigenschaften und die mechanische Integrität bei der Herstellung beispielsweise von Wurst der nahtlosen Schlauchhülle excellent ohne durch eine Naht beeinträchtigt zu werden. Bevorzugt wird die Hülle zur Verpackung von Wurstwaren, Tiernahrung, Käse, Teigmassen oder Suppen verwendet.

Der Gegenstand der Erfindung soll anhand der folgenden Beispiele näher erläutert werden.

### Vergleichsbeispiel 1

Eine mehrschichtige nahtlose Schlauchhülle bestehend aus 3 Schichten

| | |
|---|---|
| Schicht A: | 100% PA6/66 (Ultramid C35F Fa. BASF) mit einer Schichtdicke von 5 µm. |
| Schicht B: | 100% PA6/66 (Ultramid C35F Fa. BASF) mit einer Schichtdicke von 20 µm. |
| Schicht C: | 93% PA 6 (Durethan B40F Fa. Bayer) und 7% Antiblockmittel mit einer Schichtdicke von 5 µm. |

wurde auf drei Einschneckenextrudern über eine Ringdüse zu einem Primärschlauch geformt. Der Schlauch wurde schnell abgekühlt, dann auf die zum Verstrecken erforderliche Mindesttemperatur erwärmt, mit Hilfe von innen wirkender Pressluft stark biaxial verstreckt und anschließend in einer weiteren Heizzone thermofixiert. Der Schlauch konnte über die Thermofixierung in seinen mechanischen Eigenschaften eingestellt werden und besaß eine mittlere Wanddicke von 30 µm.

### Beispiel 1

Eine mehrschichtige nahtlose Schlauchhülle bestehend aus folgenden 5 Schichten:

| | |
|---|---|
| Schicht A: | 98% PA6/66 (Viskositätszahl=195, Schmelzpunkt=196°C, Folientyp) + 2% Cellulosefaser (1% Laubholz-Cellulose mit ØL=60µm und ØD=20µm und 1% Laubholz-Cellulose mit ØL=23/µm und ØD=17µm) mit einer Schichtdicke von 22 µm. |
| Schicht B: | 100% EVOH (32mol% Ethylen, MFI=1,6g/10min) mit einer Schichtdicke von 3 µm. |
| Schicht C: | 100% PA6 (Viskositätszahl=225, Folientyp) mit einer Schichtdicke von 12 µm. |
| Schicht D: | 100% Haftvermittler (anhydrit-modifiziertes Polyolefin auf Basis LLDPE, Schmelzpunkt=120°C, MFI=1,6g/10min) mit einer Schichtdicke von 4 µm. |
| Schicht E: | 97% PA6 (Viskositätszahl=225, Folientyp) + 3% Antiblockmasterbatch mit einer Schichtdicke von 8 µm. |

wurde auf 5 Einschneckenextrudern plastifiziert und homogenisiert und mittels einer 5-Schicht-Coextrusionsdüse in Schlauchform überführt. Der Schlauch wurde schnell abgekühlt, dann auf die zum Verstrecken erforderliche Mindesttemperatur erwärmt, mit Hilfe von innen wirkender Pressluft biaxial verstreckt und anschließend in einer weiteren Heizzone thermofixiert. Der Schlauch konnte über die Thermofixierung in seinen mechanischen Eigenschaften eingestellt werden und besaß eine mittlere Wanddicke von 49 µm.

### Beispiel 2

Eine mehrschichtige nahtlose Schlauchhülle bestehend aus folgenden 5 Schichten:

| | |
|---|---|
| Schicht A: | 98% PA6/66 (Viskositätszahl=195, Schmelzpunkt=196°C, Folientyp) + 2% Cellulosefasern (Laubholz-Cellulose mit ØL=23µm und ØD=17µm) mit einer Schichtdicke von 22 µm. |
| Schicht B: | 100% EVOH (32mol% Ethylen, MFI=1,6g/10min) mit einer Schichtdicke von 3 µm. |
| Schicht C: | 100% PA6 (Viskositätszahl=225, Folientyp) mit einer Schichtdicke von 12 µm. |
| Schicht D: | 100% Haftvermittler (anhydrit-modifiziertes Polyolefin auf Basis LLDPE, Schmelzpunkt=120°C, MFI=1,6g/10min) mit einer Schichtdicke von 4 µm. |
| Schicht E: | 97% PA6 (Viskositätszahl=225, Folientyp) + 3% Antibloclanasterbatch mit einer Schichtdicke von 8 µm. |

wurde auf 5 Einschneckenextrudern plastifiziert und homogenisiert und mittels einer 5-Schicht-Coextrusionsdüse in Schlauchform überführt. Der Schlauch wurde schnell abgekühlt, dann auf die zum Verstrecken erforderliche Mindesttemperatur erwärmt, mit Hilfe von innen wirkender Pressluft biaxial verstreckt und anschließend in einer weiteren Heizzone thermofixiert. Der Schlauch konnte über die Thermofixierung in seinen mechanischen Eigenschaften eingestellt werden und besaß eine mittlere Wanddicke von 49 µm.

### Beispiel 3:

Eine mehrschichtige nahtlose Schlauchhülle bestehend aus folgenden 5 Schichten:

| | |
|---|---|
| Schicht A: | 88% PA6/66 (Viskositätszahl=195, Schmelzpunkt=196°C, Folientyp) + 2% Cellulosefasern (Laubholz-Cellulose mit ØL=23µm und ØD=17µm) + 10 % Farbmasterbatch orange mit einer Schichtdicke von 22 µm. |
| Schicht B: | 100% EVOH (32mo1% Ethylen, MFI=1,6g/10min) mit einer Schichtdicke von 3 µm. |
| Schicht C: | 100% PA6 (Viskositätszahl=225, Folientyp) mit einer Schichtdicke von 12 µm. |
| Schicht D: | 100% Haftvermittler (anhydrit-modifiziertes Polyolefin auf Basis LLDPE, Schmelzpunkt=120°C, MFI=1,6g/10min) mit einer Schichtdicke von 4 µm. |
| Schicht E: | 97% PA6 (Viskositätszahl=225, Folientyp) + 3% Antiblockmasterbatch mit einer Schichtdicke von 8 µm. |

wurde auf 5 Einschneckenextrudern plastifiziert und homogenisiert und mittels einer 5-Schicht-Coextrusionsdüse in Schlauchform überführt. Der Schlauch wurde schnell abgekühlt, dann auf die zum Verstrecken erforderliche Mindesttemperatur erwärmt, mit Hilfe von innen wirkender Presslift biaxial verstreckt und anschließend in einer weiteren Heizzone thermofixiert. Der Schlauch konnte über die Thermofixierung in seinen mechanischen Eigenschaften eingestellt werden und besaß eine mittlere Wanddicke von 49 µm.

### Beispiel 4

Eine mehrschichtige nahtlose Schlauchhülle bestehend aus 3 Schichten

| | |
|---|---|
| Schicht A: | 100% PA6/66 (Viskositätszahl=195, Schmelzpunkt=196°C, Folientyp) mit einer Schichtdicke von 5 µm. |
| Schicht D: | 97% PA6/66 (Viskositätszahl=195, Schmelzpunkt=196°C, Folientyp) und 3% Cellulosefasern (1,5% Laubholz-Cellulose mit ØL=60µm und ØD=20µm und 1,5% Laubholz-Cellulose mit ØL=23µm und ØD=17µm) mit einer Schichtdicke von 20 µm. |
| Schicht E: | 97% PA6 (Viskositätszahl=225, Folientyp) und 3% Antiblockmasterbatch mit einer Schichtdicke von 6 µm. |

wurde auf drei Einschneckenextrudern über eine Ringdüse zu einem Primärschlauch geformt. Der Schlauch wurde schnell abgekühlt, dann auf die zum Verstrecken erforderliche Mindesttemperatur erwärmt, mit Hilfe von innen wirkender Pressluft stark biaxial verstreckt und anschließend in einer weiteren Heizzone thermofixiert. Der Schlauch konnte über die Thermofixierung in seinen mechanischen Eigenschaften eingestellt werden und besaß eine mittlere Wanddicke von 30 µm.

### Beispiel 5

Eine mehrschichtige nahtlose Schlauchhülle bestehend aus 5 Schichten

| | |
|---|---|
| Schicht A: | 100% PA6/66 (Viskositätszahl=195, Schmelzpünkt=196°C, Folientyp) mit einer Schichtdicke von 5 µm. |
| Schicht B: | 100% PA6/66 (Viskositätszahl=195, Schmelzpunkt=196°C, Folientyp) mit einer Schichtdicke von 20 µm. |
| Schicht C: | 100% PA6 (Viskositätszahl=225, Folientyp) mit einer Schichtdicke von 5 µm. |
| Schicht D: | 98% PA6/66 (Viskositätszahl=195, Schmelzpunkt=196°C, Folientyp) und 2% Cellulosefasern (1% Laubholz-Cellulose mit ØL=60µm und ØD=20µm und 1% Laubholz-Cellulose mit ØL=23µm und ØD=17µm) mit einer Schichtdicke von 5 µm. |
| Schicht E: | 93% PA6 (Viskositätszahl=225, Folientyp) und 7% Antiblockmasterbatch mit einer Schichtdicke von 6 µm. |

wurde auf 5 Einschneckenextrudern über eine Ringdüse zu einem Primärschlauch geformt. Der Schlauch wurde schnell abgekühlt, dann auf die zum Verstrecken erforderliche Mindesttemperatur erwärmt, mit Hilfe von innen wirkender Pressluft stark biaxial verstreckt und anschließend in einer weiteren Heizzone thermofixiert. Der Schlauch konnte über die Thermofixierung in seinen mechanischen Eigenschaften eingestellt werden und besaß eine mittlere Wanddicke von 41 µm.

### Beispiel 6

Eine mehrschichtige nahtlose Schlauchhülle bestehend aus 5 Schichten

| | |
|---|---|
| Schicht A: | 97% PA6/66 (Viskositätszahl=195, Schmelzpunkt=196°C, Folientyp) und 3% Cellulosefasern (1,5% Laubholz-Cellulose mit ØL=60µm und ØD=20µm und 1,5% Laubholz-Cellulose mit ØL=23µm und ØD=17µm) mit einer Schichtdicke von 5 µm. |
| Schicht B: | 100% PA6/66 (Viskositätszahl=195, Schmelzpunkt=196°C, Folientyp) mit einer Schichtdicke von 20 µm. |
| Schicht C: | 100% PA6 (Viskositätszahl=225, Folientyp) mit einer Schichtdicke von 5 µm. |
| Schicht D: | 98% PA6/66 (Viskositätszahl=195, Schmelzpunkt=196°C, Folientyp) und 2% Cellulosefasern (1% Laubholz-Cellulose mit ØL=60µm und ØD=20µm und 1% Laubholz-Cellulose mit ØL=23µm und ØD=17µm) mit einer Schichtdicke von 5 µm. |
| Schicht E: | 93% PA6 (Viskositätszahl=225, Folientyp) und 7% Antiblockmasterbatch mit einer Schichtdicke von 6 µm. |

wurde auf 5 Einschneckenextrudern über eine Ringdüse zu einem Primärschlauch geformt. Der Schlauch wurde schnell abgekühlt, dann auf die zum Verstrecken erforderliche Mindesttemperatur erwärmt, mit Hilfe von innen wirkender Pressluft stark biaxial verstreckt und anschließend in einer weiteren Heizzone thermofixiert. Der Schlauch konnte über die Thermofixierung in seinen mechanischen Eigenschaften eingestellt werden und besaß eine mittlere Wanddicke von 41 µm.

### Referenzbeispiel 1 :

Es handelt sich um das Handelsprodukt Kunststoffdarm Walsroder "K plus" mit 5 Schichten und einer Gesamtschichtstärke von 49□m der Fa. CaseTech GmbH & Co. KG.

### Referenzbeispiel 2 :

Das Handelsprodukt Walsroder "F plus" der Fa. CaseTech GmbH & Co. KG. Es handelt sich um einen innenlackierten (PVDC) Cellulosefaserdarm.

### Prüfkriterien:

Hüllenabschnitte wurden 30 min lang gewässert, anschließend bei konstantem Fülldruck mit feinkörnigem Brühwurstbrät gefüllt und an den Enden mit Metallclips verschlossen. Dann wurden die Würste aufgehängt, in einem Brühschrank mit Raucherzeuger 30 min lang mit rauchgesättigtem Wasserdampf bei 75°C behandelt, anschließend 60 min lang mit Wasserdampf ohne Rauch bei 80°C gegart. Die Würste wurden an der Luft auf Raumtemperatur abgekühlt und dann in einem Kühlraum bei etwa 6°C gelagert. Tabelle 1 zeigt die Ergebnisauswertung.

**Tabelle 1**

| | **VB1** | **B1** | **B2** | **B3** | **B4** | **B5** | **B6** | **RB1** | **RB2** |
|---|---|---|---|---|---|---|---|---|---|
| Wasserdampfdurchlässigkeit (g·m⁻²-d⁻¹) | 30 | 5 | 5 | 5 | 32 | 14 | 15 | 4 | 5 |
| Sauerstoffdurchlässigeit (ml·m⁻²d⁻¹·bar⁻¹) | 40 | 4 | 4 | 4 | 44 | 24 | 26 | 4 | 40 |
| Gewichtsverlust | 2 | 1 | 1 | 1 | 2 | 2 | 2 | 1 | 1 |
| Schäleigenschaften | 2 | 1 | 1 | 1 | 1 | 1 | 1 | 2 | 1 |
| Zylindrizität | 1 | 1 | 1 | 1 | 1 | 1 | 1 | 1 | 1 |
| Natürl. Optik | 6 | 1 | 1 | 1 | 1 | 1 | 1 | 6 | 1 |
| Natürl. Haptik | 6 | 1 | 1 | 1 | 2 | 2 | 1 | 6 | 1 |
| Farbdeckung | 2 | 2 | 2 | 2 | 2 | 1 | 2 | 1 | 1 |
| Anschnittverhalten (heiß) | 4 | 1 | 1 | 1 | 1 | 1 | 1 | 6 | 6 |
| Weiterreißeigenschaften | 4 | 1 | 1 | 1 | 1 | 1 | 1 | 4 | 6 |
| Stippeigenschaften | 5 | 1 | 1 | 1 | 1 | 1 | 1 | 5 | 5 |
| Oberflächenstruktur | 6 | 1 | 1 | 1 | 2 | 2 | 1 | 6 | 1 |
| Kranzeigenschaften | 2 | 2 | 2 | 2 | 1 | 1 | 1 | 2 | 6 |

| | | | | | | | | | |
|---|---|---|---|---|---|---|---|---|---|
| Bewertung : 1 = sehr gut 2=gut 3 = befriedigend 4 = ausreichend 5 = mangelhaft 6 = sehr mangelhaft | | | | | | | | | |

Die relevanten Eigenschaften der nachfolgend beschriebenen mehrschichtige nahtlose Schlauchhülle wurden folgendermaßen ermittelt:
Wasserdampfdurchlässigkeit: nach ASTM F1249-01 bei einer Temperatur von 23°C und einer relativen Luftfeuchtigkeit von 85%. Der Wert gibt die Menge an Wasserdampf in Gramm an, die unter den angegebenen Prüfbedingungen während eines Tages (24 Stunden) durch eine 1 m² große Fläche der zu prüfenden Hülle durchtritt.
Sauerstoffdurchlässigkeit: Die Bestimmung der O2Du erfolgt gemäß DIN 53380 Teil 3 bei einer Temperatur von 23°C und einer relativen Luftfeuchtigkeit von 75 %. Der Wert gibt das Volumen an Sauerstoff in Millilitern an, das bei einem Sauerstoff-Partialdruck von 1 bar unter den angegebenen Prüfbedingungen während eines Tages (24 Stunden) durch eine 1 m² große Fläche der zu prüfenden Hülle durchtritt.
Gewichtsverlust: Die zu prüfenden Hüllen werden mittels einer handelsüblichen Füllmaschine mit oxidationsempfmdlichem Testfüllgut (Prüfbrät auf Brühwurstbasis) prall gefüllt, beidseitig durch einen Clip verschlossen. Nach dem Wiegen der erhaltenen Würste werden diese in einem Lagerraum bei Raumtemperatur gelagert. Nach Ablauf von 20 Tagen werden die Würste erneut gewogen, wobei sich der prozentuale Gewichtsverlust aus dem Verhältnis der Differenz von Gewicht vor der und nach der Lagerung zum Gewicht vor der Lagerung ergibt (Schulnotenprinzip).
Schäleigenschaften: beurteilt wurde wie leicht sich die Hülle nach dem Einschneiden abschälen ließ und wie gut das Schälverhalten (z.B. Richtungswechsel beim Schälen) war (Schulnotenprinzip).
Zylindrizität: objektives Urteil über Kaliberdifferenz zwischen dem Wurstdurchmesser oben, mitte und unten (Schulnotenprinzip)
Natürliche Optik: subjektives Urteil über den optischen Eindruck wie Faltenbildung und Konsistenz der Würste (Schulnotenprinzip)
Natürliche Haptik: subjektives Urteil über den haptischen Eindruck wie fester Griff und natürliche Oberflläche der Würste (Schulnotenprinzip)
Farbdeckung: subjektives Urteil über die Farbintensität und Farbtreue der gefüllten eingefärbten Wursthülle vor und nach dem Brühen (Schulnotenprinzip)
Anschnittverhalten (heiß): objektives Urteil über Anzahl und Länge der beim Heißanschneiden (Kerntemperatur des Bräts ca. 35°C) verursachten Risse (Schulnotenprinzip)
Weiterreißfestigkeit: Die zu prüfenden Hüllen werden mittels einer handelsüblichen Füllmaschine mit Prüfbrät auf Brühwurstbasis prall gefüllt, beidseitig durch einen Clip verschlossen. Nach dem Brühen und Kühlen werden die ca. 50cm langen Muster halbiert und jeder Hälfte am angeschnittenen Ende in Längsrichtung ca.1cm eingeschnitten. Anschließend werden die Muster bei einer Temperatur von 70°C und einer relativen Feuchte von 30 % über mehrere Stunden warmgelagert. Die Beurteilung geschieht über die sich ausbildende Risslänge währen der Lagerung.
Stippeigenschaften: objektives Urteil über die Anzahl der gerissenen oder geplatzten Würste beim Füllen oder Brühen nach Kaltstippen (Schulnotenprinzip)
Oberflächenstruktur: subjektives Urteil über die Oberflächenstruktur der Wurst (Schulnotenprinzip)
Kranzeigenschaften: objektives Urteil über die Verkranzeigenschaften (Schulnotenprinzip)

## Patentansprüche

1. Mindestens dreischichtige, coextrudierte, schlauchförmige, biaxial gereckte nahtlose Schlauchhülle, enthaltend von außen nach innen betrachtet,
a) eine äußere Schicht A, die als Hauptkomponente ein Polyamid oder eine Mischung mehrerer Polyamide enthält,
b) gegebenenfalls eine Schicht B, die sauerstoffsperrenden Charakter aufweist,
c) gegebenenfalls eine Kernschicht C, die als Hauptkomponente ein Polyamid oder eine Mischung mehrerer Polyamide enthält,
d) eine, gegenüber der benachbarten Schicht C oder B oder A und der benachbarten Schicht E haftungsvermittelnd wirkenden Schicht D, und
e) eine innere Schicht E, die als Hauptkomponente ein Polyamid oder eine Mischung mehrerer Polyamide enthält,
f) gegebenenfalls weitere Schichten und Additive, wobei
g) zumindest eine Schicht Naturfasern mit einer Faserlänge im Bereich von 5 bis 10 000 µm oder ein Naturfasergemisch aus verschiedenen Fasertypen und/oder Faserlängen enthält.

2. Nahtlose Schlauchhülle gemäss Anspruch 1, **dadurch gekennzeichnet, dass** die Hauptkomponenten der Schicht A entweder aus einem aliphatischen Homopolyamid oder einem aliphatischen Copolyamid oder einem Blend aus aliphatischem Homo-und Copolyamid oder einem Blend aus aliphatischem Homopolyamid und einem teilaromatischen Polyamid bestehen.

3. Nahtlose Schlauchhülle gemäss Anspruch 2, **dadurch gekennzeichnet, dass** die verwendeten teilaromatischen Polyamide im wesentlichen aus m-Xylylendiamin- und Adipinsäureeinheiten oder aus Einheiten von , Hexamethylendiamin, Isophthalsäure und Terephthalsäure aufgebaut sind.

4. Nahtlose Schlauchhülle gemäss einem der vorstehenden Ansprüche, **dadurch gekennzeichnet, dass** die Naturfasern Cellulosefasern sind.

5. Nahtlose Schlauchhülle gemäss einem der vorherstehenden Ansprüche, **dadurch gekennzeichnet, dass** die Naturfasern in mindestens einer der Schichten in einer Menge von 0,1 bis 70 Gew.-%, bezogen auf das Gesamtgewicht der Schicht enthalten sind.

6. Nahtlose Schlauchhülle gemäss Anspruch 1, **dadurch gekennzeichnet, dass** Schicht D modifizierte Homo- und/oder Copolymere von α-Olefinen mit 2 bis 8 C-Atomen enthält, die Monomere aus der Gruppe der α,β-ungesättigten Dicarbonsäuren und/oder Monocarbonsäuren und/oder deren Derivate aufgepfropft oder copolymerisiert enthalten oder gegebenenfalls ein Polymer wie in Anspruch 2 beschrieben enthält.

7. Nahtlose Schlauchhülle gemäss Anspruch 1, **dadurch gekennzeichnet, dass** Schicht B aus einem annähernd vollständig hydrolysierten Ethylen-Vinylacetat-Copolymeren (EVOH) mit einem Ethylen-Anteil zwischen 25 und 53 Gewichts-% oder einem Polymer wie in Anspruch 2 oder Anspruch 6 besteht.

8. Nahtlose Schlauchhülle gemäss Anspruch 1, **dadurch gekennzeichnet, dass** Schicht C aus einem Polymer wie in Anspruch 2 besteht.

9. Nahtlose Schlauchhülle gemäss Anspruch 1, **dadurch gekennzeichnet, dass** Schicht E aus einem Polymer wie in Anspruch 2 besteht.

10. Nahtlose Schlauchhülle nach einem der vorstehenden Ansprüche, **dadurch gekennzeichnet, dass** die Summe aller Schichtdicken 25 bis 80 µm beträgt.

11. Nahtlose Schlauchhülle nach einem der vorstehenden Ansprüche, **dadurch gekennzeichnet, dass** diese thermofixiert ist.

12. Verwendung der Schlauchhülle gemäss einem der vorstehenden Ansprüche als Umhüllungsmaterial für pastöse und flüssige Füllgüter.

13. Verwendung nach Anspruch 12, **dadurch gekennzeichnet, dass** das pastöse Füllgut Wurstbrät ist.

## Claims

1. At least three-layered, coextruded, tubular, biaxially stretched seamless tubular casing comprising, viewed from the outside inwards,
a) an outer layer A which comprises as the main component a polyamide or a mixture of several polyamides,
b) optionally a layer B which has an oxygen-blocking character,
c) optionally a core layer C which comprises as the main component a polyamide or a mixture of several polyamides,
d) a layer D which has an adhesion-promoting action with respect to the adjacent layer C or B or A and the adjacent layer E and
e) an inner layer E which comprises as the main component a polyamide or a mixture of several polyamides,
f) optionally further layers and additives, wherein
g) at least one layer comprises natural fibres having a fibre length in the range of from 5 to 10,000 µm or a natural fibre mixture of various fibre types and/or fibre lengths.

2. Seamless tubular casing according to claim 1, **characterized in that** the main components of layer A comprise either an aliphatic homopolyamide or an aliphatic copolyamide or a blend of aliphatic homo- and copolyamide or a blend of aliphatic homopolyamide and a partly aromatic polyamide.

3. Seamless tubular casing according to claim 2, **characterized in that** the partly aromatic polyamides used are substantially built up from m-xylylenediamine units and adipic acid units or from units of hexamethylenediamine, isophthalic acid and terephthalic acid.

4. Seamless tubular casing according to one of the preceding claims, **characterized in that** the natural fibres are cellulose fibres.

5. Seamless tubular casing according to one of the preceding claims, **characterized in that** the natural fibres are contained in at least one of the layers in an amount of from 0.1 to 70 wt. %, based on the total weight of the layer.

6. Seamless tubular casing according to claim 1, **characterized in that** layer D comprises modified homo- and/or copolymers of α-olefins having 2 to 8 C atoms, which contain grafted-on or copolymerized monomers from the group consisting of α,β-unsaturated dicarboxylic acids and/or monocarboxylic acids and/or derivatives thereof, or optionally comprises a polymer as described in claim 2.

7. Seamless tubular casing according to claim 1, **characterized in that** layer B comprises an approximately completely hydrolyzed ethylene/vinyl acetate copolymer (EVOH) having an ethylene content of between 25 and 53% by weight or a polymer as in claim 2 or claim 6.

8. Seamless tubular casing according to claim 1, **characterized in that** layer C comprises a polymer as in claim 2.

9. Seamless tubular casing according to claim 1, **characterized in that** layer E comprises a polymer as in claim 2.

10. Seamless tubular casing according to one of the preceding claims, **characterized in that** the sum of all the layer thicknesses is 25 to 80 µm.

11. Seamless tubular casing according to one of the preceding claims, **characterized in that** this is heat-set.

12. Use of the tubular casing according to one of the preceding claims as a wrapping material for paste-like and liquid fillings.

13. Use according to claim 12, **characterized in that** the paste-like filling is sausage meat.

## Revendications

1. Enveloppe tubulaire sans soudure, étirée biaxialement, en forme de tuyau, formée par co-extrusion et comportant au moins trois couches, laquelle enveloppe comprend, de l'extérieur vers l'intérieur :
a) une couche externe A qui contient, en tant que composant principal, un polyamide ou un mélange de plusieurs polyamides ;
b) éventuellement, une couche B qui fait barrière à l'oxygène ;
c) éventuellement, une couche de coeur C qui contient, en tant que composant principal, un polyamide ou un mélange de plusieurs polyamides ;
d) une couche D jouant le rôle d'intermédiaire d'adhésion pour la couche adjacente C, B ou A et la couche adjacente E ;
e) et une couche interne E qui contient, en tant que composant principal, un polyamide ou un mélange de plusieurs polyamides ;
f) ainsi que, éventuellement, d'autres couches et des adjuvants ; étant entendu
g) qu'il y a au moins une couche qui contient des fibres naturelles, longues de 5 à 10 000 µm, ou un mélange de fibres naturelles de divers types et/ou de diverses longueurs.

2. Enveloppe tubulaire sans soudure, conforme à la revendication 1, **caractérisée en ce que** le composant principal de la couche A est formé soit d'un homopolyamide aliphatique, soit d'un copolyamide aliphatique, soit d'un mélange d'homopolyamide aliphatique et de copolyamide aliphatique, soit d'un mélange d'homopolyamide aliphatique et d'un polyamide partiellement aromatique.

3. Enveloppe tubulaire sans soudure, conforme à la revendication 2, **caractérisée en ce que** le polyamide partiellement aromatique utilisé est essentiellement constitué de motifs dérivés de la méta-xylylène-diamine et de l'acide adipique, ou de motifs dérivés de l'hexaméthylènediamine, de l'acide isophtalique et de l'acide téréphtalique.

4. Enveloppe tubulaire sans soudure, conforme à l'une des revendications précédentes, **caractérisée en ce que** les fibres naturelles sont des fibres de cellulose.

5. Enveloppe tubulaire sans soudure, conforme à l'une des revendications précédentes, **caractérisée en ce que** les fibres naturelles sont contenues, au moins dans l'une des couches, en une quantité représentant de 0,1 à 70 % du poids total de la couche.

6. Enveloppe tubulaire sans soudure, conforme à la revendication 1, **caractérisée en ce que** la couche D contient des homopolymères et/ou copolymères modifiés d'α-oléfines en C₂₋₈, qui comportent, à l'état greffé ou copolymérisé, des monomères choisis dans l'ensemble constitué par les acides dicarboxyliques ou monocarboxyliques α,β-insaturés et leurs dérivés, ou contient éventuellement un polymère d'un type décrit dans la revendication 2.

7. Enveloppe tubulaire sans soudure, conforme à la revendication 1, **caractérisée en ce que** la couche B est constituée d'un copolymère d'éthylène et d'acétate de vinyle presque totalement hydrolysé, autrement dit un copolymère de type EVOH, comportant de 25 à 53 % en poids de motifs dérivés de l'éthylène, ou est constituée d'un polymère d'un type indiqué dans la revendication 2 ou dans la revendication 6.

8. Enveloppe tubulaire sans soudure, conforme à la revendication 1, **caractérisée en ce que** la couche C est constituée d'un polymère d'un type décrit dans la revendication 2.

9. Enveloppe tubulaire sans soudure, conforme à la revendication 1, **caractérisée en ce que** la couche E est constituée d'un polymère d'un type décrit dans la revendication 2.

10. Enveloppe tubulaire sans soudure, conforme à l'une des revendications précédentes, **caractérisée en ce que** la somme des épaisseurs de toutes les couches vaut de 25 à 80 µm.

11. Enveloppe tubulaire sans soudure, conforme à l'une des revendications précédentes, **caractérisée en ce qu'**elle a subi un thermofixage.

12. Utilisation d'une enveloppe sans soudure, conforme à l'une des revendications précédentes, en tant que matériau d'enrobage pour produits de remplissage liquides ou pâteux.

13. Utilisation conforme à la revendication 12, **caractérisée en ce que** le produit pâteux de remplissage est de la chair à saucisses.
